# EUROPÄISCHE PATENTSCHRIFT

(11) **EP 0 371 302 B1**
(45) Veröffentlichungstag und Bekanntmachung des Hinweises auf die Patenterteilung: **15.09.1993**
(21) Anmeldenummer: 89120939.7
(22) Anmeldetag: 11.11.1989
(51) Int. Cl.: B23H 7/10

(54) **Schneiddraht-Stromzuführung an einer Funkenerosionsmaschine**
Cutting wire power supply for a spark erosion machine
Guide-fil distributeur de courant pour machine d'usinage par étincelles

(30) Priorität: 28.11.1988 DE 3840049
(43) Veröffentlichungstag der Anmeldung: 06.06.1990
(73) Patentinhaber: CHARMILLES TECHNOLOGIES S.A., 1217 Meyrin 1 (CH)
(72) Erfinder: Rühl, Falk, Dr., D-5106 Roetgen-Rott (DE); Wauer, Gerd, Dr.-Ing., D-6750 Kaiserslautern (DE)
(74) Vertreter: Hugelin, Christiane

(56) Entgegenhaltungen:
- CH-A- 594 477
- DE-A- 2 723 238
- DE-A- 3 639 724
- DE-U- 8 707 919

## Beschreibung

Die Erfindung betrifft eine Schneiddraht-Stromzüfuhrung an einer Funkenerosionsmaschine.

Derartige Stromzuführungen sind in zahlreichen Ausbildungsformen bekannt. Die zu überwindenden Schwierigkeiten ergeben sich daraus, daß zwischen dem Schneiddraht und den diesen berührend ganz oder teilweise umschließenden oder tangierenden Oberflächen des Stromzuführungskörpers ein stationär fester metallischer Kontakt mit einer gleichbleibenden Kontaktfläche für den Stromübergang nicht besteht. Vielmehr gleitet der Schneiddraht mit relativ hoher Geschwindigkeit an den Kontaktflächen vorbei. Die Schwierigkeiten vergrößern sich mit der Steigerung der Schneiddraht-Laufgeschwindigkeit, die zur Erzielung hoher Schneidleistungen so hoch als möglich bemessen werden soll. Bei bekannten Schneiddraht-Stromzuführungen bestehen die Kontaktflächen aus gebräuchlichen Hartmetallen, beispielsweise Wolframkarbiden bzw. Sinterkörpern aus Wolfram-Kobalt-Legierungen. Es hat sich gezeigt, daß diese Legierungen infolge ihre verhältnismäßig hohen elektrischen Widerstandes sich sehr stark erwärmen, so daß die Kobaltmatrix herausschmilzt. Die scharfkantigen Wolframkörner verletzen die Oberflächen des Schneiddrahtes durch Anritzen bzw. Anschneiden, so dadurch Risse verursacht werden, durch welche der Draht nach kürzerer oder längerer Zeit zerstört wird.

Bei jedem Drahtbruch tritt ein Stillstand des Erodierprozesses und der gesamten Maschine ein. Der gebrochene Draht muß abgeschnitten und der neue Drahtanfang muß neu eingefädelt und die Maschine wieder in Gang gesetzt werden. Um die Häufung solcher Drahtbrüche zu vermeiden, besteht ein Bedürfnis, eine dauerhafte und trotzdem schonende Stromzuführung zum Schneiddraht zu finden. Einerseits soll eine hohe elektrische Leitfähigkeit und andererseits eine hohe Verschleißfestigkeit erreicht werden, zwei Forderungen, die sich gegenseitig auszuschließen scheinen. Hochfeste Werkstoffe sind schlechte Leiter und gut leitfähige Stoffe wie z. B. Elektrokohle, Graphit, Kupfer bieten keine Verschleißfestigkeit gegen Abrieb.

Gemäß DE-OS 36 29 004 (EPA 02 59 601) hat man versucht die Schneidelektrode durch einen Behälter mit einem elektrisch gut leitenden Fluid zu führen. Nachteilig bei dieser Vorrichtung ist, daß Abdichtungsprobleme auftreten und daher Verluste am Fluid auftreten. Nicht unproblematisch sind die Fluidverluste wegen der Verunreinigung des Dielektrikum und ferner sind sie z. B. Quecksilber ökologisch bedenklich.

Im DE-GM 87 07 919 werden Hartmetallbeschichtungen, z.B. aus Titannitrit bestehend, vorgeschlagen. Diese beugen zwar dem hohen Abriebsverschleiß vor, leisten aber kaum einen Beitrag zur verbesserten Stromleitfähigkeit.

In der DE-PS 36 11 001 wird versucht dem vorgenannten Mangel abzuhelfen, in dem das Hartmetall mit einem elektrisch leitfähigen, relativ zum Hartmetallkern weicherem Material z.B. Kupfer überzogen wird. Auch diese Ausführung erscheint nur bedingt tauglich, da der Kupferüberzug relativ sehr schnell abgearbeitet wird und eine sogenannte Leitrille bilden soll. Die Leitrille selbst arbeitet sich jedoch auch insbesondere in Seitenrichtung nach und nach aus und es treten die eingangs dargelegten Probleme auf.

Eine Materialzusammensetzung für die Stromzuführungselemente der Schneiddraht-Stromzuführung an einer Funkenerosionsmaschine ist durch die japanish Patentveröffentlichung No. 62-78795 - KIYOSHI INOUE - bekannt geworden.

Dort handelt es sich um eine Dispersion, bei der in eine flüssige Küpferschmelze Hartmetallpulver eingestreut oder eingerührt wird, so dass das Matrixmaterial weiches Kupfer ist, welches unter Abrieb schnell verschleisst. Aus dem Stand der Technik Sind sogenannte Durchdringungsverbundwerkstoffe bekannt. Vergl. z.B. Günter Spur, Handbuch der Fertigungstechnik, 1981 Seite 824: dort wird ein Durchdringungsverbundwerkstoff gezeigt, welcher aus einem Metallkörper besteht, der von einem zusammenhängenden Porennetz durchzogen ist, und der eine erhebliche Festigkeit und Biegesteifigkeit aufweist. Die Poren können entweder bei der Sinterung mit einem Metall gefüllt werden oder die Füllung erfolgt in einem getrennten Arbeitsgang. Beispielsweise werde bei Kontaktwerkstoffen aus Wolfram-Kupfer oder Molybdän-Silber die hohe Leitfähigkeit des Kupfers bzw. Silbers mit der Abbrandfestigkeit des Wolframs und des Molybdäns in idealer Weise kombiniert.

Demgegenüber kann eine Verbesserung nach dem Grundgedanken der Erfindung durch eine Art Kompromißlösung in der Weise erreicht werden, daß ein Werkstoff für den Stromübergang gefunden wird, welcher eine möglichst hohe elektrische Leitfähigkeit und eine möglichst hohe Verschleißfestigkeit in sich vereinigt. Daher wird eine Schneiddraht - Stromzuführung gemäß Anspruch 1 vorgeschlagen.

Eine bevorzugte, vorteilhafte Ausbildung besteht darin, daß bei einer Sinterlegierung der Anteil von Wolfram zwischen 50 und 95 % liegt, wobei mit der innerhalb des erfindungsgemäßen Bereichs liegenden Legierung von 70 bis 80 % Wolfram und 20 bis 30 % Kupfer die besten Ergebnisse erzielt wurden.

Weitere vorteilhafte Merkmale der Erfindung sind noch darin zu sehen, daß die Sinterlegierung eine Zugfestigkeit zwischen 600 und 700 N/mm², eine elektrische Leitfähigkeit von 15 bis 25 m/Ωmm², eine Wärmeleitfähigkeit zwischen 0,40 und 0,50 cal/cm.sec.^{°}C aufweist.

Die weitere Ausbildung nach der Erfindung ist zweckmäßig derart getroffen, daß die Kontakt-Oberflächen aus dem Sinterwerkstoff als Beschichtung auf einem Kontaktkörper aus einem metallischen Werkstoff aufgebracht sind, der Sinterwerkstoff als Plättchen in einen Kontaktkörper eingelassen ist, oder aber, daß die Kontakt-Oberflächen die Aupenflächen von aus Sinterwerkstoff bestehenden Kontaktkörpern sind, der Sinterwerkstoff als Auflageplättchen auf einen Kontaktkörper aufgebracht ist.

Die Kontaktkörper sind im allgemeinen kleine Plättchen, die in Kontakthaltern von unterschiedlicher Gestaltung und Ausbildung gefaßt oder an diesen befestigt sind. Dabei ist der Kontakthalter in der Regel Teil eines Kontakt-Elements, welches zwei oder mehr Kontakthalter und weitere Schneiddrahtführungsteile enthalten kann.

Um eine sichere Stromübertragung zu erreichen ist eine dauernde satte Berührung des Schneiddrahtes mit den stromführenden Kontakt-Oberflächen der Stromzuführungselemente erforderlich. Hierzu sind zahlreiche Vorrichtungen bekannt. Besonders geeignet sind die derart ausgelegten Vorrichtungen, dar die Kontakthalter mit den Kontaktkörpern in Betriebsstellung in die Bewegungsachse des Schneiddrahtes ragend und diesen tangierend berührend angeordnet und aus der Betriebsstellung rückziehbar sind, und abgewandelt in der Weise, daß in Betriebsstellung die Kontakthalter in die Bewegungsachse des Schneiddrahtes ragend und diesen aus der Bewegungsachse auslenkend angeordnet sind. Es ist auch eine Ausbildungsweise vorteilhaft, bei der die Kontaktkörper an oder in zwei einander beabstandet gegenüberliegenden Stromzuführungschaltern befestigt sind, von denen mindestens einer beweglich und unter einer auf den Schneiddraht gerichteten Anpreßkraft stehend ausgebildet ist, wobei die Kontaktkörper mit Drahtführungsrillen versehen sein können.

Eine weitere Ausbildungsweise kann auch darin bestehen, daß der Kontakthalter als rotierend gelagerte, mit einer zylindrischen Lauf- und Berührungsfläche für den Schneiddraht versehene Kontaktrolle ausgebildet ist, oder aber, daß die Kontaktrolle mit einer umlaufenden Führungskerbe versehen ist. In Abwandlung hiervon können auch die zwei Kontaktrollen in einer Schwenkachse in einem Abstand voneinander angeordnet und durch Schwenken aus einer Ausrückstellung unter Auslenkung des Schneiddrahtes aus seiner Bewegungsachse in die Betriebsstellung versetzbar sein.

Vorteilhaft kann es ferner auch sein, wenn die Befestigung der Kontaktkörper in zweiteiligen öffen- und schließbaren Halterungen vorgesehen ist, wobei der zweigeteilte Halterungskörper aufklappbar sein kann.

Wegen des hohen Verschleißes von bisher gebräuchlichen weichen Materialen Graphit, Elektrokohle, oder elektrisch gut leitender Metallen wie z. B. Kupfer, als Kontaktkörper für die Stromübertragung auf den Schneiddraht, war es bisher erforderlich, mehrmals während einer Wochenarbeitsperiode die Kontaktkörper auszuwechseln. Auch bei Verwendung von verschleißfesten Hartmetallen war dies wegen häufiger Schneiddrahtbrüche oft erforderlich.

Mit den erfindungsgemäßen Mischmetallen ist nun für die Stromübertragung ein Werkstoff verfügbar, der selbst dem bisher in Abriebverhalten und Formbeständigkeit besten Werkstoff Wolfram überlegen ist und trotzdem nicht in den bisherigen Maße abrasiv auf den Schneiddraht einwirkt.

Mit den neuen Werkstoffen werden die stromübertragenden Kontakt-Oberflächen derart geschont, daß deren Verschleiß etwa um den Faktor 5 - 8 gesenkt wird. Dies bedeutet eine sehr wesentliche Verlängerung der erforderlichen Wartungs- und Einstellungsintervalle. Das Auswechseln der Stromübertragungs-Kontaktkörper ist weniger oft erforderlich, was insbesondere längere bedienerlose Fertigszeiten ermöglicht.

Die Stromübertragungs-Kontaktkörper mit ihren kleinen Kontakthaltern sind kleine, leicht auswechselbare Austauschteile. Wegen des Manipulierens beim Auswechseln und der mechanischen Belastung dieser Teile während der Arbeitsphase kommt der Werkstoffqualität eine ganz besondere Bedeutung zu, die in den physikalischen Werten des Kupfer-Wolfram Werkstoffes zum Ausdruck kommt.

Das pulvermetallurgisch hergestellte Wolfram-Kupfer mit 70 bis 80 % Wolframgehalt hat eine völlig faserfreie, gleichmäßig feinkörnige Gefügestruktur, eine hohe Härte und einen hohen E-Modul. Im Gegensatz zu gewalzten oder gezogenen weicheren Metallen hat es einen besonders hohen Verformungswiderstand. Die vom Kupfer her bekannte Verformung oder Vibration bei schlanken Körpern tritt daher nicht auf. Die völlig fasserfreie, gleichmäßig feinkörnige Gefügestruktur von hoher Festigkeit läßt bei den Kontaktkörpern keine Verformung zu und arbeitet vibrationsfrei. Daraus ergibt sich eine höhere Oberflächenfestigkeit.

Ausführungsbeispiele der Erfindung lassen weitere vorteilhafte Merkmale und Besonderheiten erkennen, die anhand der Darstellungen in der Zeichnung im folgenden näher beschrieben und erläutert sind.

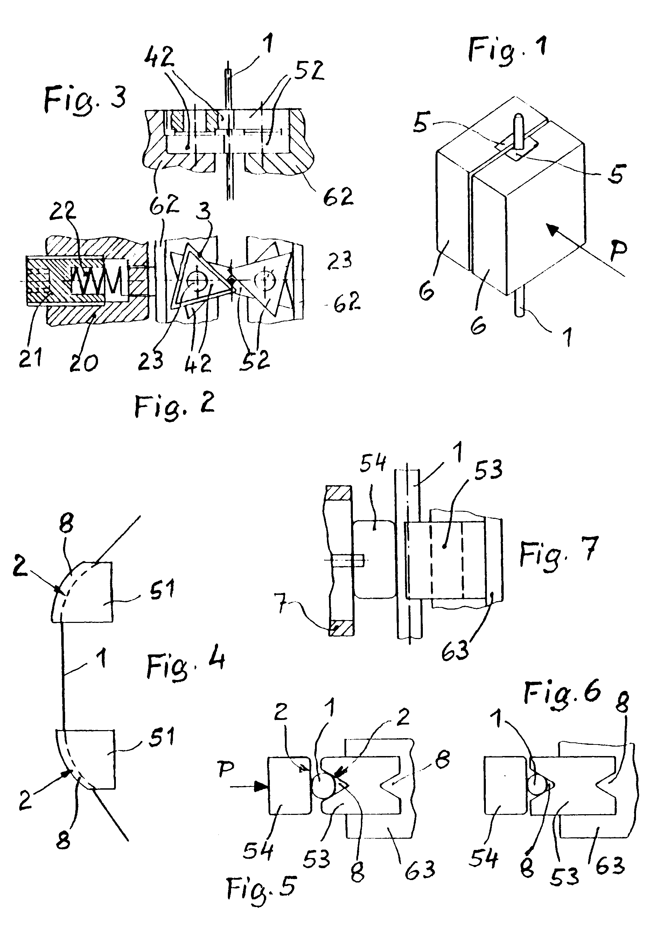

Es zeigen
- Fig. 1: eine Schneiddraht-Stromzuführung im perspektivischer Ansicht;
- Fig. 2: eine andere Stromzuführung in Draufsicht;
- Fig. 3: die Stromzuführung gem. Fig. 2 im Querschnitt;
- Fig. 4: eine andere Stromzuführung in Seitenansicht;
- Fig. 5 und 6: eine andere Stromzuführung mit verschieden dickem Schneiddraht in Draufsicht;
- Fig. 7: die Stromzuführung nach Fig. 5 und 6 im Querschnitt;
- Fig. 8 und 9: eine Stromzuführung mittels Stromzuführungsrolle;
- Fig. 10: eine abgewandelte Stromzuführung gem Fig. 8;
- Fig. 11 und 12: eine weiter abgewandelte Stromzuführung gem. Fig. 8 bis 10;
- Fig. 13: eine weiter abgewandelte Stromzuführung gem. Fig. 11/12;
- Fig. 15: eine Stromzuführungsanordnung;
- Fig. 16: ein Stromzuführungselement;
- Fig. 17: ein anderes Stromzuführungselement;
- Fig. 18: ein Stromzuführungselement in anderer Ausführung;
- Fig. 19: ein Stromzuführungselement in einer weiteren Ausführung;
- Fig. 20: ein Stromzuführungselement als Führungskopf;
- Fig. 21: ein anderes Stromzuführungselement als Führungskopf;
In allen Figuren ist der Schneiddraht mit 1 bezeichnet. In Fig. 1 sind einander gegenüberliegend zwei Kontakthalter 6 mit Kontaktkörpern 5 aus Sinterwerkstoff dargestellt, von denen einer oder beide mit Drahtführungsrillen 8 für den Schneiddraht 1 versehen sind. Mit dem Pfeil P ist die Richtung einer Anpreßkraft angedeutet.

In den Fig. 2 und 3 sind je zwei Kontaktkörper 4 oder 5 als gleichseitige Dreiecksplatten 42, 52 ausgebildet und übereinander schwenkbar um einen Bolzen 23 in einander gegenüberliegenden Kontakthaltern 62 angeordnet. Die Kontaktkörper 52 bestehen als Ganzes aus dem Sinterwerkstoff, während die Kontaktkörper 42 lediglich eine Beschichtung 3 aus dem Sinterwerkstoff aufweisen. Dabei ist die Anordnung und Stellung der Dreiecksplatten so getroffen, daß jeweils zwei Dreiecksplatten 42 und 52 jedes Kontakthalters 62 einen Winkel zueinander bilden, der als Drahtführungsrille dient, so daß der Schneiddraht 1 von vier in Winkeln zueinanderstehenden Kontaktflächen berührt wird. Der eine der Kontakthalter 62 ist in einer nicht näher dargestellten Führung verschiebbar und steht unter der Wirkung einer in einem Gehäuse 20 gehaltenen Schraubenfeder 22 unter einem Anpreßdruck, dessen Größe mittels der Verschraubung 21 veränderbar ist.

Die Fig. 4 stellt das Prinzip einer einfachen Stromzuführung dar, bei welcher die beiden Kontaktkörper 51 aus dem Sinterwerkstoff, die mit Drahtführungsrillen 8 versehen sind, den unter Zugspannung stehenden Schneiddraht 1 aus seiner Bewegungsachse auslenken. Auch bei diesen Kontaktkörpern können die Kontakt-Oberflächen 2 aus einer Beschichtung 3 aus Sinterwerkstoff bestehen.

In den Fig. 5 bis 7 sind die Kontaktkörper 53 aus dem Sinterwerkstoff in Kontakthaltern 63 gefaßt und mit Drahtführungsrillen 8 versehen. Der Schneiddraht 1 wird durch die unter dem Anpreßdruck gemäß Pfeil P stehenden, in den Stromzuführungshaltern 7 aufgenommenen Kontaktplatten 54 in der Drahtführungsrille 8 geführt, so daß dadurch eine Dreipunktführung hergestellt wird. Wie aus den Fig. 5 und 6 ersichtlich ist, sind die Drahtführungsrillen 8 an den Kontaktkörpern 52 beidseitig vorhanden. Damit besteht die Möglichkeit, nach Abnutzung der ersten Rille durch umgekehrtes Einsetzen in die Fassung 63 die zweite Drahtführungsrille 8 zu benutzen.

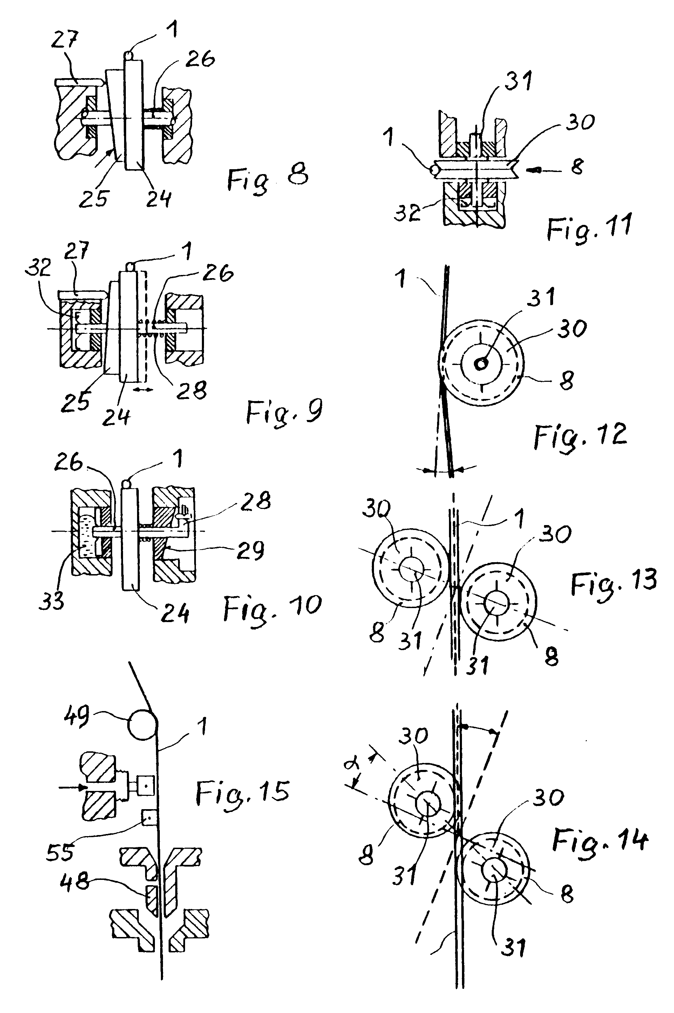

Die Figuren 8 bis 10 zeigen Möglichkeiten der Stromzuführung zum Schneiddraht 1 mittels der Kontaktrollen 24, auf welchen der Schneiddraht 1 läuft und deren Umfangsfläche aus dem Sinterwerkstoff besteht. Die gut stromleitende Kontaktrolle 24 ist mit einer ebenfalls gut stromleitenden Welle 26 verbunden, auf welche der Strom mittels Schleifring 32 oder Fluid 33 in nicht näher dargestellter Weise übertragen wird. Um den Schneiddraht 1 nicht dauernd auf derselben Spur auf der Kontaktrolle 24 laufen zu lassen, ist gem. Fig. 8 und 9 mit dem Druckbolzen 27 zusammenwirkend eine Kurvenscheibe 25 vorgesehen, an welche die querverschiebbare Welle 26 mittels Federdruck 28 angedrückt wird. Da sie auf diese Weise einer dauernden Querverschiebung unterworfen ist, bestreicht der Schneiddraht in seinem Lauf die ganze Breite der Lauffläche der Kontaktrolle 24.

Die gleiche Wirkung wird gem. Fig. 10 dadurch erzielt, daß der mit der Welle 26 verbundene Schleiffinger 28 unter Federdruck auf der feststehenden Kurvenscheibe 28 entlangschleift und dabei die Welle 26 mit der Kontaktrolle 24 querverschiebt.

Wie aus den Fig. 11 und 12 ersichtlich ist, kann die Kontaktrolle 30 auch mit einer Drahtführungsrille 8 versehen sein. Die Kontaktrolle 30 kann als Ganzes aus dem Sinterwerkstoff bestehen, oder aber sie besteht aus einem anderen gut leitenden Werkstoff und ist mit einem Außenkranz oder einer Beschichtung aus dem Sinterwerkstoff versehen, wobei die Stromzuführung über Schleifkontakte 32 zur Rollenwelle 31 erfolgt. Eine Anordnung mit zwei Kontaktrollen 30 mit Drahtführungsrille 8 ist in den Fig. 13 und 14 dargestellt. Auch hier können die Kontaktrollen 30 ganz aus dem Sinterwerkstoff hergestellt sein oder nur eine Beschichtung oder einen Außenkranz aus Sinterwerkstoff aufweisen. Wie Fig. 13 zeigt, weisen in dieser Stellung die Kontaktrollen 30 einen Abstand voneinander auf, der ein Einfädeln ermöglicht. In Betriebsstellung sind die Rollenwellen 31 um einen Winkel α geschwenkt und auf diese Weise unter einem Anpreßdruck stehend an den Schneiddraht 1 angedrückt, so daß eine gute Berührung erfolgt.

Aus Fig. 15 geht eine andere Anordnung hervor, die prinzipiell der Ausbildungsweise nach Fig. 4 entspricht. Der dort mit 55 bezeichnete Kontaktkörper ist ähnlich dem Kontaktkörper 51 mit einer nicht dargestellten Drahtführungsrille versehen. Diese kann entfallen, wenn die Drahtführung von der Rolle 49 und der Drahtführungsdüse 48 übernommen wird.

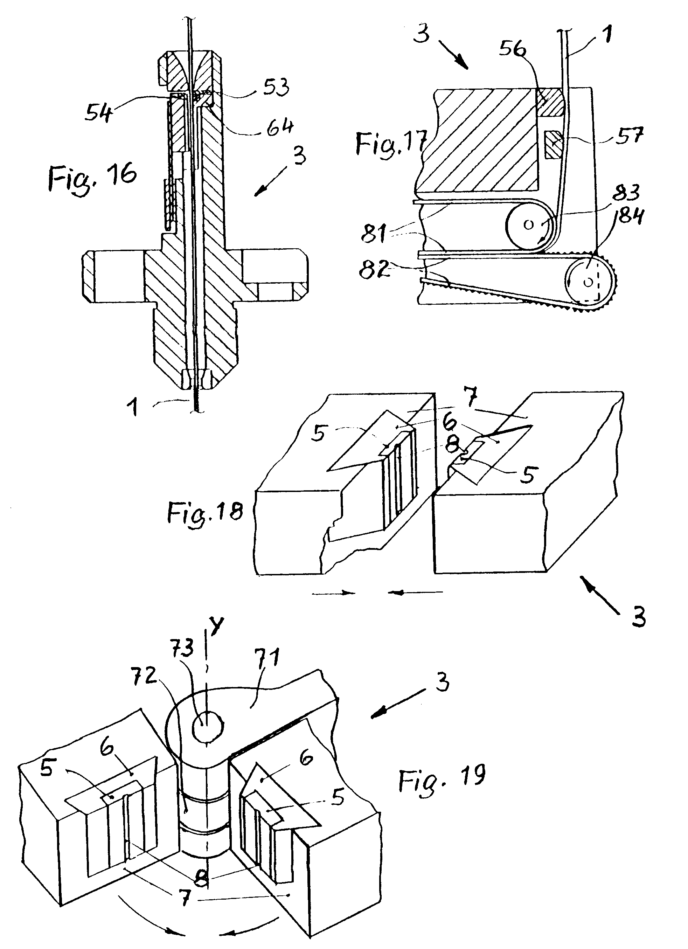

Eine andere Ausgestaltung ergibt sich aus Fig. 16, in der ein ganzes Schneiddraht-Führungselement mit Stromzuführung 3 dargestellt ist. Die Stromzuführung erfolgt mittels des Kontaktkörpers 52 und der Kontaktplatte 54 aus dem Sinterwerkstoff - siehe Fig. 5 bis 7 -, die in dem Kontakthalterteil 64 angeordnet sind. Bei der in Fig. 17 gezeigten Anordnung wird der Schneiddraht 1 in bekannter Weise mittels der über die Bandführungsrollen 83, 84 laufenden Drahtführungsbänder 81, 82 unter Vorspannung an den aus dem Sinterwerkstoff bestehenden Kontaktkörpern 56, 57 entlanggezogen, die auch mit einer Drahtführungsrille 8 versehen sein können.

Die Fig. 18 und 19 zeigen ebenfalls Stromzuführungs-Elemente 3, bei denen zur Drahtzuführung bzw. Einfädelung - wie bei der Anordnung nach den Fig. 13 und 14 - die Stromzuführungshalter 7 geöffnet und geschlossen werden können. In Fig. 18 sind in den Stromzuführungshaltern 7 Kontakthalter 6 aufgenommen, welche mit den Kontaktkörpern 5 aus dem Sinterwerkstoff bestückt sind; diese sind im Ausführungsbeispiel mit den Drahtführungsrillen 8 versehen. Die beiden Stromzuführungshalter 7 können in Pfeilrichtung zusammengeführt werden und umfassen dann den Schneiddraht mit ihren Rillen 8. In der Ausführung gem. Fig. 19 sind die Stromzuführungshalter 7 aufklappbar, nämlich um den Y-Achsbolzen 73 mittels der scharnierartigen Teile 71, 72 schwenkbar ausgebildet. Auch hier sind die beiden Stromzuführungshalter 7 mit den Kontakthaltern 6 versehen, die mit den Kontaktkörpern 5 aus dem Sinterwerkstoff bestückt sind.

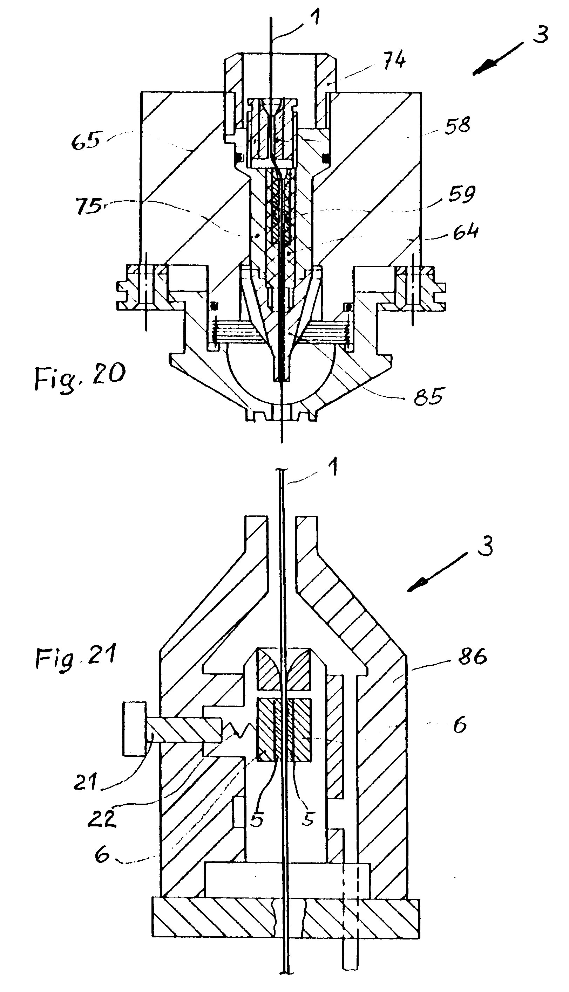

Weitere Stromzuführungselemente 3 sind aus den Fig. 20 und 21 ersichtlich. In Fig. 20 sind zwei düsenförmige Kontaktkörper aus dem Sinterwerkstoff 58 und 59 axial versetzt angeordnet, so daß der Schneiddraht 1 beim Übertritt aus dem Kontaktkörper 58 in den Kontaktkörper 59 ausgelenkt wird und dabei sicher in Berührung mit deren Düsenmündungen kommt. Der Kontaktkörper 58 ist im hülsenartigen Kontakthalter 65 aufgenommen, der exzentrisch in der Kontakthalterhülse 75 sitzt. Innerhalb des Einführungsmundstücks 74 ist die Kontakthalterhülse 75 von Zeit zu Zeit um einige Winkelgrad drehbar, so daß immer wieder eine andere Stelle der Düsenmündungen mit dem Schneiddraht 1 in Berührung kommt. Der untere Kontaktkörper 59 ist zentrisch in der Kontakthalterhülse 75 eingesetzt. Mit 85 ist die Schneiddrahtführung bezeichnet, die in den Raum 86 reicht, welcher der Flüssigkeitszufuhr dient.

Das in der Fig. 21 dargestellte Stromzuführungselement enthält in seinem Zuführungskörper 87 eine Anordnung, wie diese aus der Prinzipdarstellung gem. Fig. 1 ersichtlich ist. Es handelt sich um zwei Kontaktkörper 5 aus dem Sinterwerkstoff, die in den Kontakthaltern 6 aufgenommen sind. Der linke Kontakthalter 6 ist querverschiebbar und steht unter der Anpreßwirkung der Schraubenfeder 22, deren Position mittels der Schraube 21 veränderlich ist. Infolge der Anpressung des linken Kontaktkörpers ist eine gute Berührung und Stromübertragung sichergestellt.

## Patentansprüche

1. Schneiddraht-Stromzuführung an einer Funkenerosionsmaschine,
dadurch gekennzeichnet,
daß die den Schneiddraht (1) berührend ganz oder teilweise umschließenden oder ihn tangierenden, den Strom übertragenden Kontakt-Oberflächen (2) der Stromzufübrungselemente (3) aus einem Sinterwerkstoff aus einem Hartmetall und einem Metall hoher elektrischer Leitfähigkeit wie Kupfer oder Silber bestehen, welcher eine Härte HV 50 : zwischen 200 und 250 und ein E-Modul zwischen 200 und 300 10³N/mm² aufweist.

2. Schneiddraht-Stromzuführung nach Anspruch 1, dadurch gekennzeichnet, daß das Hartmetall Wolfram, Molybdän, Titan, Mangan, Tantal oder Niob ist.

3. Schneiddraht-Stromzuführung nach den Ansprüchen 1 und 2, dadurch gekennzeichnet, daß der Anteil von Wolfram zwischen 50 und 95 % liegt.

4. Schneiddraht-Stromzuführung nach Anspruch 3, dadurch gekennzeichnet, daß die Metallanteile aus 70 bis 80 % Wolfram und 20 bis 30 % Kupfer bestehen.

5. Schneiddraht-Stromzuführung nach Anspruch 4, dadurch gekennzeichnet, daß der Sinterwerkstoff eine Zugfestigkeit zwischen 600 und 700 N/mm² aufweist.

6. Schneiddraht-Stromzuführung nach Anspruch 1, dadurch gekennzeichnet, daß der Sinterwerksfoff eine elektrische Leitfähigkeit von 15 bis 25 m/Ωmm² aufweist.

7. Schneiddraht-Stromzuführung nach Anspruch 1, dadurch gekennzeichnet, daß der Sinterwerkstoff eine Wärmeleitfähigkeit zwischen 0,40 und 0,50 cal/cm.sec.^{°}C aufweist.

8. Schneiddraht-Stromzuführung nach Anspruch 1, dadurch gekennzeichnet, daß die Kontakt-Oberflächen (2) aus dem Sinterwerkstoff als Beschichtung (3) auf einem Kontaktkörper (4) aus einem metallischen Werkstoff aufgebracht sind.

9. Schneiddraht-Stromzuführung nach Anspruch 1, dadurch gekennzeichnet, daß die Kontakt-Oberflächen (2) die Außenflächen von aus Sinterwerkstoff bestehenden Kontaktkörpern (5, 52, 53, 54, 55, 56, 57, 58, 59) sind.

10. Schneiddraht-Stromzuführung nach den Ansprüchen 8 oder 9, dadurch gekennzeichnet, daß die Kontaktkörper (4 oder 5) in Kontakthaltern (6, 62, 63, 64) gefaßt oder an diesen befestigt sind.

11. Schneiddraht-Stromzuführung nach einem der Ansprüche 8 bis 10, dadurch gekennzeichnet, daß die Kontakthalter (6) mit den Kontaktkörpern (4, 42, oder 5, 52, 53, 54, 55) in Betriebsstellung in die Bewegungsachse des Schneiddrahtes ragend und diesen tangierend berührend angeordnet und aus der Betriebsstellung rückziehbar sind.

12. Schneiddraht-Stromzuführung nach Anspruch 11, dadurch gekennzeichnet, daß in Betriebsstellung die Kontakthalter (6) mit ihren Kontaktkörpern (5, 51, 58, 59) in die Bewegungsachse (X) des Schneiddrahtes (1) ragend und diesen aus der Bewegungsachse auslenkend angeordnet sind.

13. Schneiddraht-Stromzuführung nach Ansprüchen 8 bis 10, dadurch gekennzeichnet, daß die Kontaktkörper (4 oder 5) an oder in zwei einander beabstandet gegenüberliegenden Stromzuführungshaltern (7) befestigt sind, von denen mindestens einer beweglich und unter einer auf den Schneiddraht (1) gerichteten Anpreßkraft stehend ausgebildet ist.

14. Scheiddraht-Stromzuführung nach den Ansprüchen 11 bis 13, dadurch gekennzeichnet, daß die beiden einander beabstandet gegenüberliegend angeordneten Kontaktkörper (4 oder 5) mit Drahtführungsrillen (8) versehen sind.

15. Schneiddraht-Stromzuführung nach Ansprüchen 10 und/oder 11, dadurch gekennzeichnet, daß der Kontakthalter als rotierend gelagerte, mit einer zylindrischen Lauf- und Berührungsfläche für den Schneiddraht (1) versehene Kontaktrolle (24) ausgebildet ist.

16. Schneiddraht-Stromzuführung nach Ansprüchen 10 und/oder oder 11, dadurch gekennzeichnet, daß der Kontakthalter als rotierend gelagerte, mit einer umlaufenden Führungskerbe (8) versehene Kontaktrolle (30) ausgebildet ist.

17. Schneiddraht-Stromzuführung nach Anspruch 12, dadurch gekennzeichnet, daß zwei Kontaktrollen (30) in einer Schwenkachse in einem Abstand voneinander angeordnet und durch Schwenken aus einer Ausrückstellung unter Auslenkung des Schneiddrahtes (1) aus seiner Bewegungsachse in die Betriebsstellung versetzbar sind.

18. Schneiddraht-Stromzufübrung nach Anspruch 10, dadurch gekennzeichnet, daß die Befestigung der Kontaktkörper (5) in zweiteiligen öffen- und schließbaren Halterungen (7) vorgesehen ist.

19. Schneiddraht-Stromzuführung nach Anspruch 18, dadurch gekennzeichnet, daß der zweigeteilte Halterungskörper (7, 71, 72) aufklappbar ist.

20. Schneiddraht-Stromzuführung nach Anspruch 10, dadurch gekennzeichnet, daß ein zweigeteilter Halterungskörper (7) vorgesehen und durch Verschieben der Teile in Querrichtung zur Schneiddraht-Achse öffen- und schließbar ist.

## Claims

1. Cutting wire power supply for a spark erosion machine
characterized in
that the current-transmitting contact surfaces (2) of the power supply elements (3) that touch the cutting wire (1), enclose it completely or in part or tangently contact it, consist of a sintered material comprising a hard metal and a metal with a high electrical conductivity, e.g. copper or silver, having a HV 50 hardness between 200 and 250 and an E module between 200 and 300 10³N/mm².

2. Cutting wire power supply acc. to claim 1,
characterized in
that tungsten, molybdenum, titanium, manganese, tantalum or niobium is used as a hard metal.

3. Cutting wire power supply acc. to claims 1 and 2,
characterized in
that the tungsten fraction ranges between 50 and 95%.

4. Cutting wire power supply acc. to claim 3,
characterized in
that the metal fractions consist of 70 to 80% tungsten and of 20 to 30% copper.

5. Cutting wire power supply acc. to claim 4,
characterized in
that the sintered material has a tensile strength between 600 and 700 N/mm².

6. Cutting wire power supply acc. to claim 1,
characterized in
that the sintered material shows an electrical conductivity of 15 to 25 m/Ωmm².

7. Cutting wire power supply acc. to claim 1,
characterized in
that the sintered material shows a thermal conductivity between 0,40 and 0,50 cal/cm.sec. ^{°}C.

8. Cutting wire power supply acc. to claim 1,
characterized in
that the contact surfaces (2) of sintered material represent a coating (3) on a contact body (4) of metallic material.

9. Cutting wire power supply acc. to claim 1,
characterized in
that the contact surfaces (a) represent the external faces of the contact bodies (5, 52, 53, 54, 55, 56, 57, 58, 59) consisting of sintered material.

10. Cutting wire power supply acc. to claims 8 or 9,
characterized in
that the contact bodies (4 or 5) are retained in or have been secured to contact holders (6, 62, 63, 64).

11. Cutting wire power supply acc. to one of the claims 8 to 10,
characterized in
that in their working position, the contact holders (6), together with the contact bodies (4, 42 or 5, 52, 53, 54, 55), have been arranged in such a way that they protrude into the motion axis of the cutting wire and tangently contact it and, furthermore, that they can be retracted from the working position.

12. Cutting wire power supply acc. to claim 11,
characterized in
that in their working position, the contact holders (6), together with their contact bodies (5, 51, 58, 59), have been arranged in such a way that they protrude into the motion axis (X) of the cutting wire (1) and cause its excursion from said axis.

13. Cutting wire power supply acc. to claims 8 to 10,
characterized in
that the contact bodies (4 or 5) have been secured to or in two spaced and opposite power supply holders (7) of which at least one has been designed as a mobile element being under contact pressure towards the cutting wire (1).

14. Cutting wire power supply acc. to claims 11 to 13,
characterized in
that both spaced and opposite contact bodies (4 or 5) have been provided with wire guiding grooves (8).

15. Cutting wire power supply acc. to claims 10 and/or 11,
characterized in
that the contact holder has been desiged as a contact roller (24) which has rotationally been lodged and provided with a cylindrical running and contacting face for the cutting wire (1).

16. Cutting wire power supply acc. to claims 10 and/or 11,
characterized in
that the contact holder has been designed as a contact roller (30) which has rotationally been lodged and provided with a circumferential guiding notch (8).

17. Cutting wire power supply acc. to claim 12,
characterized in
that two spaced contact rollers (30) have been arranged in a swivelling axis and can be displaced from the release position to the working position by a swivel motion causing an excursion of the cutting wire (1) from its motion axis.

18. Cutting wire power supply acc. to claim 10,
characterized in
that it is provided to secure the contact bodies (5) in bipartite holders (7) which can be opened and closed.

19. Cutting wire power supply acc. to claim 18,
characterized in
that the bipartite holder body (7, 71, 72) can be swung open.

20. Cutting wire power supply acc. to claim 10,
characterized in
that a bipartite holder body (7) has been provided which can be opened and closed by moving the parts transversely to the axis of the cutting wire.

## Revendications

1. Guide-fil distributeur de courant pour machine d'usinage par étincelles,
caractérisé par
ce que les surfaces de contact (2) des éléments d'alimentation du courant (3), lesquelles touchent le fil (1), l'entourent entièrement ou en partie ou se trouvent tangentes à lui, consistent en une matière frittée comprenant un métal dur et un métal de haute conductibilité électrique, p.ex. cuivre ou argent, et ayant une dureté HV 50 entre 200 et 250 et un coefficient d'élasticité entre 200 et 300 10³N/mm².

2. Guide-fil distributeur de courant selon revendication 1,
caractérisé par
ce que le métal dur est de tungstène, molybdène, titane, manganèse, tantale ou niobium.

3. Guide-fil distributeur de courant selon revendications 1 et 2,
caractérisé par
ce que la part de tungstène se situe entre 50 et 95%.

4. Guide-fil distributeur de courant selon revendication 3,
caractérisé par
ce que les parts de métal consistent en tungstène (70 à 80%) et en cuivre (20 à 30%).

5. Guide-fil distributeur de courant selon revendication 4,
caractérisé par
ce que la matière frittée a une résistance à la traction entre 600 et 700 N/mm².

6. Guide-fil distributeur de courant selon revendication 1,
caractérisé par
ce que la matière frittée présente une conductibilité électrique de 15 à 25 m/Ωmm².

7. Guide-fil distributeur de courant selon revendication 1,
caractérisé par
ce que la matière frittée a une conductibilité thermique entre 0,40 et o,50 cal/cm.sec.^{°}C.

8. Guide-fil distributeur de courant selon revendication 1,
caractérisé par
ce que les surfaces de contact (2) en matière frittée ont été appliquées en forme de revêtement (3) sur un corps de contact (4) en matière métallique.

9. Guide-fil distributeur de courant selon revendication 1,
caractérisé par
ce que les surfaces de contact (2) représentent les faces extérieures des corps de contact (5, 52, 53, 54, 55, 56, 57, 58, 59) qui consistent en matière frittée.

10. Guide-fil distributeur de courant selon revendication 8 ou 9,
caractérisé par
ce que les corps de contact (4 ou 5) ont été enchâssés dans des porte-contact (6, 62, 63, 64) ou fixés à ces derniers.

11. Guide-fil distributeur de courant selon l'une des revendications 8 à 10,
caractérisé par
ce que les porte-contact (6) ont été disposés de telle façon qu'en position de travail, ils saillissent, avec leurs corps de contact (4, 42 ou 5, 52, 53, 54, 55), dans l'axe de mouvement du fil et touchent ce dernier tangentiellement tout en permettant leur retraite de la position de travail.

12. Guide-fil distributeur de courant selon revendication 11,
caractérisé par
ce que les porte-contact (6) ont été disposés de telle façon qu'en position de travail, ils saillissent, avec leurs corps de contact (5, 51, 58, 59), dans l'axe de mouvement (X) du fil (1) tout en le sortant de cet axe.

13. Guide-fil distributeur de courant selon revendications 8 à 10,
caractérisé par
ce que les corps de contact (4 ou 5) ont été fixés à ou en deux porte-alimentation (7) espacés et opposés dont, au moins, l'un a été conçu comme élément mobile qui est sous une force de pression vers le fil (1).

14. Guide-fil distributeur de courant selon revendications 11 à 13,
caractérisé par
ce que les deux corps de contact espacés et opposés (4 ou 5) ont été dotés des rainures guide-fil (8).

15. Guide-fil distributeur de courant selon revendications 10 et/ou 11,
caractérisé par
ce que le porte-contact a été conçu en tant que galet de contact (24) logé de manière rotative et muni d'une surface cylindrique de roulement et de contact pour le fil (1).

16. Guide-fil distributeur de courant selon revendications 10 et/ou 11,
caractérisé par
ce que le porte-contact a été conçu comme galet de contact (30) logé de façon rotative et doté d'une entaille de guidage périphérique (8).

17. Guide-fil distributeur de courant selon revendication 12,
caractérisé par
ce que deux galets de contact (30), disposés de façon espacée dans un axe de pivotement, pourront être déplacés en position de travail par un mouvement pivotant à partir d'une position de débrayage tout en sortant le fil (1) de son axe de mouvement.

18. Guide-fil distributeur de courant selon revendication 10,
caractérisé par
ce qu'il est prévu de fixer les corps de contact (5) en des porte-alimentation bipartis (7) qui pourront s'ouvrir et se fermer.

19. Guide-fil distributeur de courant selon revendication 18,
caractérisé par
ce que le corps de porte-alimentation biparti (7, 71, 72) est repliable.

20. Guide-fil distributeur de courant selon revendication 10,
caractérisé par
ce qu'un corps de porte-alimentation biparti (7) est prévu qui pourra s ouvrir et se fermer par le déplacement des éléments en direction transversale à l'axe du fil.
